# EUROPEAN PATENT SPECIFICATION

(11) **EP 3 636 458 B1**
(45) Date of publication and mention of the grant of the patent: **20.04.2022**
(21) Application number: 18813146.0
(22) Date of filing: 01.05.2018
(51) Int. Cl.: B60C 11/03, B60C 11/12, B60C 11/11, B60C 11/13

(54) **TIRE**
REIFEN
PNEU

(30) Priority: 07.06.2017 JP 2017112843
(43) Date of publication of application: 15.04.2020
(73) Proprietor: Bridgestone Corporation, Tokyo 104-8340 (JP)
(72) Inventor: ISHIHARA, Nobuyuki, Tokyo 104-8340 (JP); MATSUNAGA, Midori, Tokyo 104-8340 (JP)
(74) Representative: Oxley, Robin John George
(86) International application number: PCT/JP2018/017406
(87) International publication number: WO 2018/225425

(56) References cited:
- EP-A1- 0 397 639
- WO-A1-2016/072133
- WO-A1-2016/072133
- JP-A- 2002 219 909
- JP-A- 2002 219 909
- JP-A- 2005 007 919
- JP-A- 2005 007 919
- JP-A- 2007 126 006
- JP-A- 2009 196 527
- JP-A- 2011 025 837
- JP-A- 2011 245 996
- JP-A- 2011 245 996
- JP-A- 2013 121 760
- JP-A- 2013 216 243
- JP-A- 2013 220 726
- JP-A- 2013 220 726
- JP-A- 2013 248 927

## Description

### BACKGROUND OF THE INVENTION

### Field of the Invention

The present invention relates to a tire provided with blocks each divided by a pair of sipes extending in a tire width direction.

### Related Background of the Invention

In a tire to be used on an ice snow road surface, a tread pattern is set corresponding to a tire performance on the ice snow road surface (an ice/snow performance) and various blocks are formed on a tread part. Conventionally, a tire in which an edge component is increased by a plurality of sipes extending in a tire width direction and the ice/snow performance is thereby secured has been known (refer to Patent Literature 1).

However, as for a conventional tire described in Patent Literature 1, it is difficult to improve an edge effect produced by sipes, and there is room for improvement from a viewpoint of further securing the ice/snow performance. Moreover, for the tire to be used on the ice snow road surface, it is required to improve a performance of an uneven wear resistance in addition to the ice/snow performance. In this regard, for example, a generation of the uneven wear is sometimes restrained by improving a rigidity of a part where the uneven wear is generated. However, when the rigidity is improved, there is concern that the ice/snow performance might be affected. Attention is also drawn to the disclosures of EP0397639A1, JP2009-196527A and JP2007-126006A, wherein EP0397639A1 is regarded as the closest prior art to the subject-matter of claim 1 and discloses a tire with a pair of dividing sipes extending in a tire width direction; separation blocks located on both sides of the pair of dividing sipes in a tire circumferential direction and separately formed in the tire circumferential direction; a step block divided between the pair of dividing sipes and forming a step to a separation block by a treading face located inside in a tire radial direction of treading faces of the separation blocks; an adjacent block which is adjacent to the separation block and the step block in the tire width direction across a circumferential groove.

### Patent Literature

Patent Literature 1: Japanese Patent Laid-Open No. 2016-203842

### SUMMARY OF THE INVENTION

### Problems to be Solved by Invention

The present invention has been made in view of the above-described conventional problem and an object thereof is to restrain a generation of an uneven wear in a tire and secure an ice/snow performance of the tire, so that a performance of an uneven wear resistance and the ice/snow performance become compatible.

### Means for solving Problems

The present invention is a tire as claimed in claim 1.

### EFFECTS OF THE INVENTION

According to the present invention, the tire can be restrained from the generation of the uneven wear and the ice/snow performance of the tire can be secured, and the performance of the uneven wear resistance and the ice/snow performance can be compatible.

### BRIEF DESCRIPTION OF THE DRAWINGS

Fig. 1 is a plan view illustrating a tread pattern of a tire of a present embodiment.
Fig. 2 is a plan view illustrating a third land part and a fourth land part of the present embodiment.
Fig. 3 is a side view illustrating a part of the third land part of the present embodiment.
Fig. 4 is a side view illustrating a state of a separation block and a step block of the present embodiment when being grounded.

### BRIEF DESCRIPTION OF THE DRAWINGS

An embodiment of a tire of the present invention will be described with referring to the attached drawings. The tire of the present embodiment is a pneumatic tire for vehicles (for example, a tire for a track or a bus, a tire for a heavy load, a tire for a passenger car), and is formed in a well-known structure by general tire constituting members. In other words, the tire includes a pair of bead parts and a pair of side wall parts located outside the pair of bead parts in a tire radial direction and a tread part which contacts with a road surface and a pair of shoulder parts located between the tread part and the pair of side wall parts. Moreover, the tire includes a pair of bead cores and a carcass arranged between the pair of bead cores and a belt arranged on an outer peripheral side of the carcass and a tread rubber having a predetermined tread pattern.

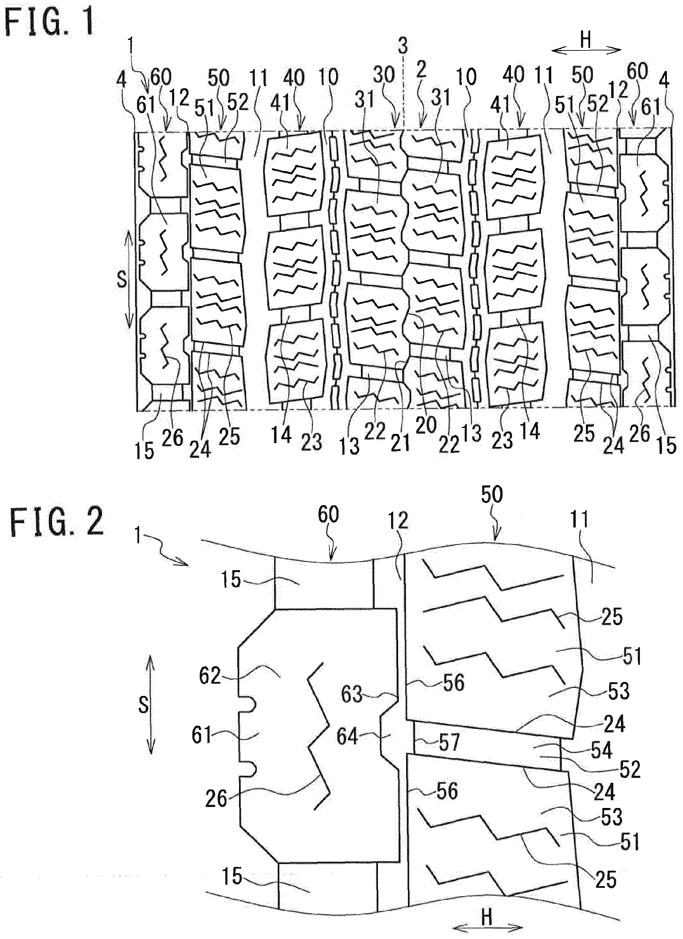

Fig. 1 is a plan view illustrating a tread pattern of a tire 1 of the present embodiment, and shows schematically a part of a tread part 2 in a tire circumferential direction S.

As illustrated, the tire 1 includes a plurality of main grooves 10 and 11, a plurality of circumferential grooves 12, a plurality of width direction grooves 13 to 15, a plurality of sipes 20 to 26, and a plurality of land parts 30, 40, 50, 60 which are formed in the tread part 2. During vehicle travelling, the tire 1 contacts with the road surface at the plurality of land parts 30, 40, 50, 60 and rolls on the road surface. At that time, treading faces of the plurality of land parts 30, 40, 50, 60 contact with the road surface. The treading faces are the outer surfaces of the land parts 30, 40, 50, 60 in the tire radial direction.

The plurality of main grooves 10 and 11 are circumferential main grooves extending in the tire circumferential direction S and are arranged apart from each other in parallel in a tire width direction H. Here, the tire 1 includes four main grooves (the two first main grooves 10 and two second main grooves 11) formed continuously along the tire circumferential direction S. A first main groove 10 is an inner main groove located on an innermost side (on a tire equator plane 3 side) in the tire width direction H among the plurality of main grooves 10 and 11, and is formed inside a second main groove 11 in the tire width direction H. The tire equator plane 3 is located at the central part of the tread part 2 in the tire width direction H.

The first main groove 10 is a central side main groove located on both sides of the tire equator plane 3 in the tire width direction H and is formed between the tire equator plane 3 and the second main groove 11 on both sides of the tire equator plane 3. The second main groove 11 is an outer main groove located on an outermost side (on a shoulder part 4 side) in the tire width direction H among the plurality of main grooves 10 and 11, and is formed outside the first main groove 10 in the tire width direction H. The shoulder part 4 is located outside the tread part 2 in the tire width direction H. On both sides of the tire equator plane 3, the second main groove 11 is located inside the shoulder part 4 in the tire width direction H, and is formed between the first main groove 10 and the shoulder part 4.

The plurality of circumferential grooves 12 are circumferential narrow grooves (sub-groove) narrower than the main grooves 10 and 11, and extend in the tire circumferential direction S. Here, the tire 1 includes the two circumferential grooves 12 formed continuously along the tire circumferential direction S. On both sides of the tire equator plane 3, the circumferential groove 12 is located outside the second main groove 11 in the tire width direction H (inside the shoulder part 4 in the tire width direction H), and formed between the second main groove 11 and the shoulder part 4.

The plurality of width direction grooves 13 to 15 are lateral grooves (lug grooves) extending in the tire width direction H, and are formed in the land parts 30, 40, 60, respectively. A part of groove bottom of each of width direction grooves 13 to 15 is a raised part (tiebar) outwardly raised in the tire radial direction, and is formed shallower than the main grooves 10, 11 and the circumferential grooves 12. The plurality of sipes 20 to 26 are break (gap) formed in the land parts 30, 40, 50, 60, respectively, and are formed toward inside of the land parts 30, 40, 50, 60 from each of the treading faces of the land parts 30, 40, 50, 60.

The tread part 2 of the tire 1 is divided in the tire width direction H by the plurality of main grooves 10, 11 and the circumferential grooves 12, and the plurality of land parts 30, 40, 50, 60 are formed in the tread part 2. The plurality of land parts 30, 40, 50, 60 are convex parts outwardly projecting in the tire radial direction, and extend along each of grooves 10, 11, 12 in the tire circumferential direction S. Moreover, the land parts 30, 40, 50, 60 are arranged in parallel in the tire width direction H at intervals.

The land parts 30, 40, 50, 60 are rib-shaped land parts formed into a rib-shape or block rows (intermittent land parts) having a plurality of blocks arranged in the tire circumferential direction S. Here, the tire 1 includes seven land parts (one first land part 30, two second land parts 40, two third land parts 50, two fourth land parts 60). The first land part 30, the second land parts 40, and the fourth land parts 60 are the block rows, and the third land parts 50 are the rib-shaped land parts.

The first land part 30 is a central land part divided by the two first main grooves 10 and is formed in the central region of the tread part 2 including the tire equator plane 3. The tire equator plane 3 is located at the central part of the first land part 30 in the tire width direction H. Moreover, a width of the first land part 30 in the tire width direction H is wider than widths of the other land parts 40, 50, 60 in the tire width direction H, and the first land part 30 is the widest land part among the plurality of land parts 30, 40, 50, 60. The first land part 30 is formed between the two first main grooves 10, and is located inside the two second land parts 40 in the tire width direction H.

The first land part 30 has the plurality of width direction grooves 13 and the plurality of sipes 20 to 22 (dividing sipes 20, 21 and closed sipes 22) and a plurality of blocks 31. The plurality of width direction grooves 13 are arranged in parallel on both sides of the tire equator plane 3 in the tire circumferential direction S at an interval. One end of a width direction groove 13 is opened to the first main groove 10, and other end of the width direction groove 13 is closed in the first land part 30. The width direction groove 13 at one side of the tire equator plane 3 and the width direction groove 13 at other side of the tire equator plane 3 are formed while being shifted in the tire circumferential direction S.

Each of the dividing sipes 20, 21 is the circumferential direction sipe extending in the tire circumferential direction S and is formed between the width direction grooves 13 at a central part in the tire width direction H of the first land parts 30. Both ends of the dividing sipes 20, 21 are opened to the width direction grooves 13, and the first land part 30 is divided in the tire width direction H by a plurality of dividing sipes 20, 21.

A block 31 in the first land part 30 is a central block located in the central region of the tread part 2. The first land part 30 is formed by the plurality of blocks 31 which are divided between the two first main grooves 10 by the two first main grooves 10, the plurality of the width direction grooves 13, and the plurality of dividing sipes 20, 21. The plurality of blocks 31 are arranged in order in the tire circumferential direction S on both sides of the tire equator plane 3, so that the width direction grooves 13 are each formed between the blocks 31. The block 31 on one side of the tire equator plane 3 and a block 31 on the other side of the tire equator plane 3 are formed while being shifted in the tire circumferential direction S.

A closed sipe 22 is a sipe closed in the block 31 and extends in the tire width direction H. Here, the block 31 has at least more than one closed sipe 22 which is a bent sipe. The closed sipe 22 extends in the tire width direction H in a zig zag shape while being bent more than once. Both ends of the closed sipe 22 are located in the block 31 and are closed in the block 31. Both wall surfaces of the closed sipe 22 are formed in a bent shape and are opposed in the block 31. A plurality of closed sipes 22 (here, four) are arranged in parallel in the tire circumferential direction S at intervals in each block 31.

The second land part 40 is a central land part divided by the first main groove 10 and the second main groove 11 and is formed in an intermediate region of the tread part 2 between the tire equator plane 3 and the shoulder part 4. The second land part 40 is formed between the first main groove 10 and the second main groove 11 on both sides of the tire equator plane 3 and is located between the first land part 30 and the third land part 50. Moreover, the second land part 40 has a plurality of width direction grooves 14 and a plurality of sipes (closed sipes) 23, and a plurality of blocks 41. The plurality of width direction grooves 14 are formed between the first main grooves 10 and the second main grooves 11 and are arranged in parallel in the tire circumferential direction S at an interval. One end and the other end of the width direction grooves 14 are opened to the first main grooves 10 and the second main grooves 11, respectively. The plurality of width direction grooves 14 pass through the second land part 40 in the tire width direction H and divide the second land part 40 in the tire circumferential direction S.

A block 41 in the second land part 40 is an intermediate block located in the intermediate region of the tread part 2. The second land part 40 is formed by the plurality of blocks 41 which are each divided between the first main groove 10 and the second main groove 11 by the first main groove 10, the second main groove 11 and the plurality of width direction grooves 14. The plurality of blocks 41 are arranged in order in the tire circumferential direction S on both sides of tire equator plane 3, so that the width direction grooves 14 are formed between the blocks 41.

A closed sipe 23 is a sipe closed in the block 41, and extends in the tire width direction H. Here, the block 41 has at least more than one closed sipe 23 which is a bent sipe. The closed sipe 23 extends in the tire width direction H in a zig zag shape while being bent more than once. Both ends of the closed sipe 23 are located in the block 41 and are closed in the block 41. Both wall surfaces of the closed sipe 23 are formed in a bent shape and are opposed in the block 41. A plurality of closed sipes 23 (here, four) are arranged in parallel in the tire circumferential direction S at an interval in each block 41.

The third land part 50 is an outer land part divided by the second main groove 11 and the circumferential groove 12, and is formed in an outer region (region on the shoulder part 4 side) of the tread part 2 in the tire width direction H. The third land part 50 is formed between the second main groove 11 and the circumferential groove 12 on both sides of the tire equator plane 3, and is located between the second land part 40 and a fourth land part 60. Moreover, the third land part 50 has a plurality of sipes 24, 25 (dividing sipes 24, closed sipes 25), and a plurality of blocks 51, 52.

A dividing sipe 24 is a width direction sipe extending in the tire width direction H, and is formed between the second main groove 11 and the circumferential groove 12. One end and the other end of the dividing sipe 24 are opened to the second main groove 11 and the circumferential groove 12, respectively. A plurality of dividing sipes 24 are passing-through sipes which pass through the third land parts 50 in the tire width direction H and are arranged in parallels in the tire circumferential direction S at an interval. A third land part 50 is divided in the tire circumferential direction S by the plurality of dividing sipes 24.

Blocks 51, 52 of the third land part 50 are outer blocks located in the outer region of the tread part 2.

The third land part 50 is formed by the plurality of blocks 51, 52 which are each divided between the second main groove 11 and the circumferential groove 12 by the second main groove 11, the circumferential groove 12 and the plurality of dividing sipes 24. The plurality of blocks 51, 52 are arranged in order in the tire circumferential direction S on both sides of the tire equator plane 3, and the dividing sipes 24 are each formed between one block 51 and the other block 52. The one block 51 and the other block 52 are formed in different shape from each other.

A closed sipe 25 is a sipe which is closed in the one block 51, and extends in the tire width direction H. Here, the block 51 has at least more than one closed sipe 25 which is a bent sipe. The closed sipe 25 extends in the tire width direction H in a zig zag shape while being bent more than once. Both ends of the closed sipe 25 are located in the blocks 51 and are closed in the blocks 51. Both wall surfaces of the closed sipes 25 are formed in a bent shape and opposed in the blocks 51. A plurality of closed sipes 25 (here, four) are arranged in parallel in the tire circumferential direction S at an interval in each block 51.

The fourth land part 60 is an outer land part divided by the circumferential grooves 12 and is formed in the outer region of the tread part 2 in the tire width direction H together with the third land part 50. Moreover, among the plurality of land parts 30, 40, 50, 60, the fourth land part 60 is an outermost land part (land part on the shoulder part 4 side) located on an outermost side in the tire width direction H (on the shoulder parts 4 side). The fourth land part 60 is formed outside the circumferential groove 12 in the tire width direction H on the both sides of the tire equator plane 3, and is located outside the third land part 50 in the tire width direction H. The circumferential groove 12 is formed between the third land part 50 and the fourth land part 60. The third land part 50 and the fourth land part 60 are adjacent in the tire width direction H in between the circumferential groove 12.

The fourth land part 60 has the plurality of width direction grooves 15 and the plurality of sipes 26 (closed sipes), and a plurality of blocks 61. The plurality of width direction grooves 15 are formed outside the circumferential grooves 12 in the tire width direction H and are arranged in parallel in the tire circumferential direction S at an interval. One end and the other end of the width direction groove 15 are opened to the circumferential groove 12 and to an outer side part of the tread part 2 respectively. The plurality of width direction grooves 15 pass through the fourth land part 60 in the tire width direction H and divide the fourth land part 60 in the tire circumferential direction S.

A block 61 of the fourth land part 60 is an outer block located in the outer region of the tread part 2. Moreover, the block 61 is the outermost block (block on the shoulder part 4 side) located on an outermost side (on the shoulder 4 side) in the tire width direction H among the plurality of blocks 31, 41, 51, 52, 61.The fourth land part 60 is formed by the plurality of blocks 61 which are each divided by the circumferential groove 12 and the plurality of width direction grooves 15 on the outside of the circumferential groove 12 in the tire width direction H.

The plurality of blocks 61 are arranged in parallel in the tire circumferential direction S on both sides of the tire equator plane 3, and the width direction groove 15 is formed between the blocks 61.

A closed sipe 26 is a sipe which is closed in the blocks 61, and extends in the tire circumferential direction S. Here, the block 61 has at least more than one closed sipe 26 which is a bent sipe. The closed sipe 26 extends in the tire circumferential direction S in a zig zag shape while being bent more than once. Both ends of the closed sipe 26 are located in the block 61 and are closed in the block 61. Both wall surfaces of the closed sipe 26 are formed in a bent shape, and are opposed in the blocks 61. One of the closed sipes 26 is formed in a central part of the block 61 in each block 61 in the tire width direction H.

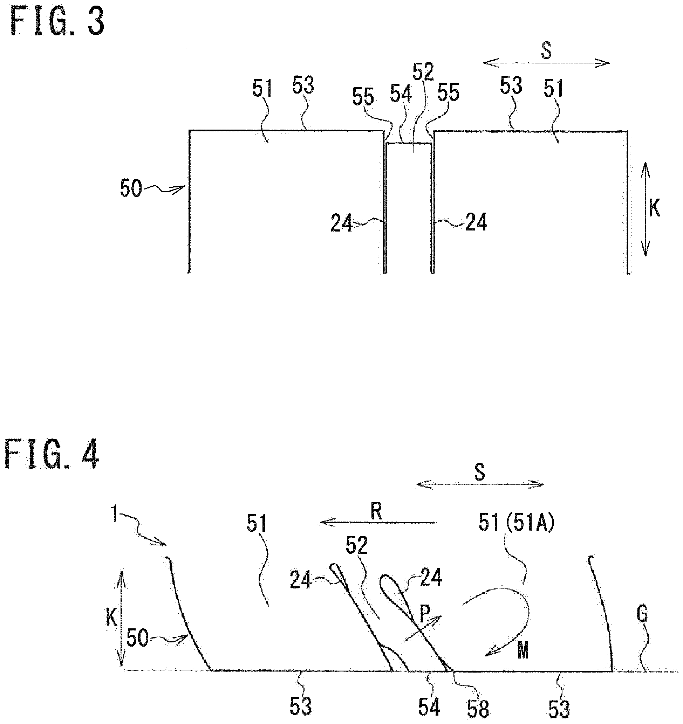

Fig. 2 is a plan view illustrating the third land part 50 and the fourth land part 60 of the present embodiment and shows an enlarged part of Fig.1. Fig. 3 is a side view illustrating a part of the third land part 50 of the present embodiment, and schematically shows the third land part 50 viewed from one side (inside or outside) in the tire width direction H.

As illustrated, two types of blocks 51, 52 (separation block 51 and step blocks 52) are formed in the third land part 50, and one type of block 61 (adjacent block) is formed in the fourth land part 60.

The tire 1 includes a pair of dividing sipes 24 formed in the third land part 50, the separation blocks 51 which are separated from each other in the tire circumferential direction S, the step block 52 which forms a step to the separation block 51, an adjacent block 61 which is adjacent to the separation block 51 and the step block 52, and sipes 25, 26 which are formed in the separation block 51 and the adjacent block 61 respectively. A dividing sipe 24 is a straight sipe extending straight and is formed between the separation block 51 and the step block 52. Both wall surfaces of the dividing sipe 24 are formed in a plane shape, and are opposed in the tire circumferential direction S.

The separation block 51, the step block 52, and the adjacent block 61 are formed outside the main groove (the second main groove 11) located in the tire width direction H, the main groove being at the outermost side in the tire width direction H among the plurality of main grooves 10 and 11. Moreover, the adjacent block 61 is formed outside the separation block 51 and the step block 52 in the tire width direction H. The separation block 51 and the adjacent block 61 are formed while being shifted in the tire circumferential direction S. The circumferential groove 12 is formed between the separation block 51 and the adjacent blocks 61 and between the step block 52 and the adjacent block 61. Only the closed sipes 25 and 26 are formed in the separation blocks 51 and the adjacent block 61 as sipes in block.

The pair of dividing sipes 24 are a pair of sipes (double sipes) that are combined each other and are formed in multiple positions in the third land part 50 at an interval in the tire circumferential direction S. In each formed position, the pair of dividing sipes 24 are formed in parallel between two (a pair) of the separation blocks 51, and adjacent each other in the tire circumferential direction S. The two separation blocks 51 are located on both sides of the pair of dividing sipes 24 (the double sipes) in the tire circumferential direction S and are formed to be separated from each other in the tire circumferential direction S. The step block 52 is divided between the pair of dividing sipes 24 and is formed between the two separation blocks 51 located on both sides in the tire circumferential direction S.

A dimension (length) of the separation block 51 in the tire circumferential direction S is larger than a dimension (width) of the separation block 51 in the tire width direction H. Therefore, the separation block 51 is a circumferential block in which it is longer in the tire circumferential direction S than in the tire width direction H.

In contrast, a dimension (length) of the step block 52 in the tire width direction H is larger than a dimension (width) of the step block 52 in the tire circumferential direction S. Therefore, the step block 52 is a width block in which it is longer in the tire width direction H than in the tire circumferential direction S.

Moreover, the dimension (width) of the step block 52 in the tire circumferential direction S is smaller than the dimension (length) of the separation block 51 in the tire circumferential direction S and the dimension (width) of the separation block 51 in the tire width direction H. The step block 52 is formed thinner than the separation block 51 as viewed from the tire circumferential direction S. As mentioned, the step block 52 is a smaller block which is smaller than the separation block 51 and is plate-like block formed in a plate shape.

The two separation blocks 51 and one step block 52 form one combined block. In the third land part 50 (refer to Fig.1), the separation block 51 and the step block 52 are arranged alternately along the tire circumferential direction S. Therefore, each separation block 51 forms the combined block with the step block 52 and the separation block 51 located on one side in the tire circumferential direction S as well as forms the combined block with the step block 52 and the separation block 51 located on the other sides in the tire circumferential direction S.

A plurality of combined blocks are arranged in order along the tire circumferential direction S with the separation blocks 51 being overlapped.

In the third land part 50, the step block 52 is divided by the pair of dividing sipes 24 and is formed in block-like between the pair of dividing sipes 24. The separation block 51 is divided by the dividing sipes 24 on both sides in the tire circumferential direction S, and is formed in block-like between the dividing sipes 24 on both sides in the tire circumferential direction S. Moreover, the separation block 51 is formed between the two step blocks 52 (the step blocks 52 on both sides in the tire circumferential direction S). The pair of dividing sipes 24 and the step block 52 are formed between the two separation blocks 51 (the separation blocks 51 on both sides in the tire circumferential direction S) in each of combined blocks. The separation block 51 and the step block 52 are formed so that they are separated from each other by the dividing sipes 24 and are opposed across the dividing sipes 24.

Each of the separation block 51, the step block 52, and the adjacent block 61 (refer to Fig.2) have treading faces 53, 54, 62 which contact with the road surface during rolling of the tire 1 (during vehicle travelling).

The separation block 51 and the adjacent block 61 are formed to have same height so that the heights of the both treading faces 53, 62 are matched. The height of the treading face 54 of the step block 52 is lower than the height of the treading face 53 of the separation block 51 and height of the treading face 62 of the adjacent block 61, and the step block 52 is thereby formed lower than the separation block 51 and the adjacent block 61 (refer to Fig.3).

The plurality of separation blocks 51 in the third land part 50 and the plurality of adjacent blocks 61 in the fourth land part 60 are arranged while being shifted by only half of each arrangement pitch (half pitch) in the tire circumferential direction S. The step block 52 is adjacent in the tire width direction H to the central part of the adjacent block 61 in the tire circumferential direction S.

When comparing heights in a tire radical direction K (refer to Fig.3), the separation block 51 is a higher block that is higher than the step block 52, and the step block 52 is a lower block that is lower than the separation block 51. The treading face 54 of the step block 52 is located inside in the tire radical direction K of the trading face 53 of the separation blocks 51 on both sides in the tire circumferential direction S. The step block 52 forms a step 55 to the separation block 51 on both sides in the tire circumferential direction S with the treading face 54.

The step 55 is a step formed between the treading face 53 of the separation block 51 and the treading face 54 of the step block 52. The step 55 is lowered toward the treading face 54 of the step block 52 from the treading face 53 of the separation block 51, and is formed inwardly in the tire radial direction K.

As for the treading faces 53 and 54, a part of the step block 52 between the two separation blocks 51 is formed into a recessed shape with the step 55.

The adjacent block 61 (refer to Fig.2) is adjacent to the two separation blocks 51 and one of the step blocks 52 in the tire width direction H across the circumferential grooves 12. A sidewall 63 of the adjacent block 61 on the circumferential groove 12 side is opposed to a sidewall 56 on the circumferential groove 12 side of the two separation blocks 51 and a sidewall 57 on the circumferential groove 12 side of the step block 52. Sidewalls 56, 57, 63 project outwardly in the tire radial direction K from a groove bottom of the circumferential groove 12 and are located in the circumferential groove 12. The adjacent block 61 has a recessed part 64 formed on the sidewall 63. On the sidewall 63, the recessed part 64 of the adjacent blocks 61 is formed at a position opposed to the sidewall 57 of the step block 52 and ends (opening) of the pair of dividing sipes 24 on the circumferential groove 12 side.

The recessed part 64 of the adjacent block 61 is formed along the sidewall 57 of the step block 52 and ends of the pair of dividing sipes 24, and is opposed to the sidewall 57 of the step block 52 and ends of the pair of dividing sipes 24. Here, the recessed part 64 of the adjacent block 61 is formed along the tire radial direction K and is opposed to a whole sidewall 57 of the step block 52 and whole ends of the pair of dividing sipes 24. The recessed part 64 of the adjacent blocks 61 is formed to be positioned opposed to the sidewall 56 of the two separation blocks 51 exceeding end positions of the pair of dividing sipes 24. Moreover, the recessed part 64 of the adjacent block 61 is formed at a position which covers the sidewall 57 of the step block 52 and ends of the pair of dividing sipes 24 on the sidewall 63 and is adjacent to the sidewall 57 of the step block 52 and ends of the pair of dividing sipes 24 in the tire width direction H (here, outside in the tire width direction H).

A groove width of the circumferential groove 12 in the recessed part 64 is wider than the groove width of the circumferential grooves 12 in other parts, and the circumferential groove 12 is widened partially in the recessed part 64.

When the adjacent block 61 is grounded, the circumferential groove 12 is closed between the adjacent block 61 except the recessed part 64 and the separation blocks 51, where the recessed part 64 prevents the adjacent blocks 61 and the step block 52 from being closed.

Specifically, when the adjacent block 61, the separation block 51, and the step block 52 are grounded, the sidewall 63 of the adjacent block 61 and the sidewall 56 of the separation block 51 are contacted at positions other than the recessed part 64, and the circumferential groove 12 is closed at contact positions of sidewalls 63 and 56. At the position of the recessed part 64, the sidewall 63 of the adjacent block 61 and the sidewall 57 of the step block 52 are not contacted, so that a cavity is formed between the adjacent blocks 61 and the step block 52 by the recessed part 64. The cavity extends along the tire radial direction K, and is formed over the whole of the sidewall 57 of the step block 52 and the whole ends of the pair of dividing sipes 24.

The adjacent block 61 is brought into contact with the separation blocks 51 without being contacted with the step block 52 when being grounded (when being grounded on the road surface). Therefore, the adjacent blocks 61 and the separation blocks 51 are supported each other when being grounded.

The separation block 51 is supported by the adjacent block 61, so that a deformation of the separation block 51 is suppressed. Accordingly, the rigidity of the adjacent block 51 is improved, and the generation of uneven wear in the separation block 51 and the third land part 50 (for example, heel and toe wear) is suppressed.

Simultaneously, the adjacent block 61 is supported by the separation blocks 51, and a deformation of the separation block 61 is suppressed. Accordingly, the rigidity of the adjacent blocks 61 is improved, and the generation of uneven wear in the separation block 61 and the fourth land part 60 is suppressed. Moreover, the step block 52 is deformed between the two separation blocks 51, so that an edge effect of the separation block 51 may be improved.

Fig.4 is a side view illustrating a state of the separation blocks 51 and the step block 52 of the present embodiment when being grounded and shows the two separation blocks 51 and one step block 52 schematically viewed from one side (inside or outside) in the tire width direction H.

As illustrated, when travelling a vehicle, the tire 1 is rotated in a tire rotational direction R, and the separation block 51 and the step block 52 are contacted with a road surface G. Accordingly, the treading face 53 of the separation block 51 and the treading face 54 of the step block 52 are pressed against the road surface G, so that the separation block 51 and the step block 52 are deformed respectively.

The separation blocks 51 are deformed so as to protrude toward the step block 52 on both sides of the step block 52 in the tire circumferential direction S. The step block 52 is put in between the two separation blocks 51, and is deformed so as to be outwardly stretched in the tire radial direction K. At that time, the step block 52 is pressed against the road surface G while being stretched by the step 55 between the separation block 51 and the step block 52, and is inwardly compressed in the tire radial direction K.

Accordingly, the step block 52 is deformed to be buckled between the two separation blocks 51. Moreover, as the adjacent block 61 is not contacted with the step block 52, the step block 52 is smoothly deformed without being constrained by the adjacent block 61.

With the deformation of the step block 52, the step block 52 is brought into contact with the separation block 51, and the separation block 51 is pressed by the step block 52 (cf. arrow P). The step block 52 presses obliquely upward a separation block 51A located on the rear side in the tire rotational direction R (front side in a vehicle travelling direction) and applies a power in a direction pressing the road surface G (moments) to the separation block 51A (cf. arrow M).

Accordingly, a periphery of an edge 58 of the separation block 51A is pressed against the road surface G, and an edge pressure at the edge 58 is increased. The edge 58 is an edge of the separation block 51A located on the front side in the tire rotational direction R (rear side in the vehicle travelling direction) and a treading end of the treading face 53 of the separation block 51A. As the edge pressure is increased, the edge effect of the separation block 51A is improved, and the ice/snow performance of the tire 1 is improved.

As explained above, according to the tire 1 of the present embodiment, the uneven wear in the tire 1 can be prevented from generating and the ice/snow performance of the tire 1 can be secured, and the performance of the uneven wear resistance and the ice/snow performance can be compatible. Moreover, the recessed part 64 of the adjacent block 61 surely prevent a contact between the adjacent block 61 and the step block 52, so that the step block 52 can be more smoothly deformed.

In rolling of the tire 1 on the ice/snow road surface, the ice/snow performance of the tire 1 is further improved by snow inside the recessed parts 64 exerting snow column shearing force.

The adjacent block 61 and the separation block 51 are supported firmly from each other by the circumferential grooves 12 closed between the adjacent block 61 and the separation block 51. As a result, the rigidity of the adjacent block 61 and the rigidity of the separation block 51 can be increased. All sipes in the separation block 51 and the adjacent block 61 are closed sipes 25, 26. Therefore, the edge component and the ice/snow performance of the tire 1 are secured while the rigidity of the separation block 51 and the rigidity of the adjacent block 61 are maintained.

The closed sipe 26 of the adjacent block 61 extends to the tire circumferential direction S. Therefore, the edge component of the adjacent block 61 in the tire circumferential direction S can be increased, so that an anti-lateral skid performance of the tire 1 can be improved.

When a power in the tire width direction H is applied to the adjacent block 61, an edge in the tire circumferential direction S is contacted with the road surface G, so that the ice/snow performance of the tire 1 can be secured.

The uneven wear is more easily generated in a part on the shoulder part 4 side of the tread part 2 than in other parts. The separation block 51, the step block 52, and the adjacent block 61 are formed outside the second main grooves 11 in the tire width direction H located at the outermost side in the tire width direction H, so that the rigidity at outer parts of the tread part 2 in the tire width direction H can be increased. Accordingly, the generation of the uneven wear can be restrained in the part on the shoulder part 4 side of the tread part 2.

The closed sipe 25 in the separation blocks 51 and the closed sipe 26 in the adjacent block 61 are bent sipes. Therefore, when the separation block 51 and the adjacent block 61 are grounded, both wall surfaces of the closed sipes 25, 26 are supported firmly each other. Accordingly, the deformation of the separation block 51 and the adjacent block 61 can be restrained, and the rigidity of the separation block 51 and the rigidity of the adjacent block 61 can be maintained.

In the adjacent block 61, the edge (the circumferential direction edge) extending in the tire circumferential direction S are formed by the closed sipes 26 which extend in the tire circumferential direction S. When the side force (lateral force) is applied in the tire 1, the circumferential edge of the adjacent block 61 is stretched in a vertical direction with respect to the direction of the side force, so that the edge effect to the side force can be obtained effectively.

Therefore, the ice/snow performance of the tire 1 can be secured and the rigidity of the adjacent blocks 61 can be also increased, so that compatibilities of the performance of the uneven wear resistance and the ice/snow performance are obtained more certainly.

In addition, one closed sipe 25 might as well be formed in the separation block 51, and a plurality of closed sipes 25 might as well be formed in the separation block 51. Moreover, one closed sipe 26 might as well be formed in the adjacent block 61, and a plurality of closed sipes 26 might as well be formed in the adjacent block 61. The closed sipes 25, 26 might as well be straight sipes extending straight in each blocks 51, 61.

The separation block 51 and the step block 52 might as well be formed in the fourth land part 60, and the adjacent block 61 might as well be formed in the third land part 50. The separation block 51, the step block 52, and the adjacent block 61 might as well be formed in land parts other than the third land part 50 and the fourth land part 60. The separation block 51, the step block 52, and the adjacent block 61 are formed in land parts adjacent in the tire width direction H in between the circumferential grooves 12. The adjacent blocks 61 might as well be adjacent to one side (for example, inside or outside) in the tire width direction H with respect to the separation block 51 and the step block 52, and the adjacent block 61 might as well be adjacent to both sides in the tire width direction H with respect to the separation block 51 and the step block 52.

The land part where the separation block 51 and the step block 52 are formed might as well be rib-shaped land part and might as well be block rows. The block row has a plurality of blocks (array of blocks) arranged at an interval to the tire circumferential direction S. When the land part is the block rows, the separation block 51 and the step block 52 are formed in the array of blocks of the block rows. In this case, the separation block 51 and the step block 52 are sub blocks which constitute a part of the array of blocks, and form a combined block in the array of blocks. The combined block is formed in one array of blocks, or the plurality of combined blocks are formed in one array of blocks. The plurality of array of blocks in the block rows have more than one combined block, respectively.

- 1: tire
- 2: tread part
- 3: tire equator plane
- 4: shoulder part
- 10: first main groove
- 11: second main groove
- 12: circumferential groove
- 13: width direction groove
- 14: width direction groove
- 15: width direction groove
- 20: dividing sipe
- 21: dividing sipe
- 22: closed sipe
- 23: closed sipe
- 24: dividing sipe
- 25: closed sipe
- 26: closed sipe
- 30: first land part
- 31: block
- 40: second land part
- 41: block
- 50: third land part
- 51: separation block
- 52: step block
- 53: treading face
- 54: treading face
- 55: step
- 56: sidewall
- 57: sidewall
- 58: edge
- 60: fourth land part
- 61: adjacent block
- 62: treading face
- 63: sidewall
- 64: recessed part
- G: road surface
- H: tire width direction
- K: tire radial direction
- R: tire rotational direction
- S: tire circumferential direction

## Claims

1. A tire (1) comprising:
a pair of dividing sipes (24) extending in a tire width direction (H);
separation blocks (51) located on both sides of the pair of dividing sipes (24) in a tire circumferential direction (S) and separately formed in the tire circumferential direction (S);
a step block (52) divided between the pair of dividing sipes (24) and forming a step to a separation block (51) by a treading face (54) located inside in a tire radial direction (K) of treading faces (53) of the separation blocks (51);
an adjacent block (61) which is adjacent to the separation block (51) and the step block (52) in the tire width direction (H) across a circumferential groove (12) and is brought into contact with the separation block (51) without being contacted with the step block (52) when being grounded, wherein
the adjacent block (61) has a recessed part (64) on a sidewall (63) on a circumferential groove side opposed to a sidewall (57) of the step block (52).

2. The tire (1) according to claim 1, wherein
the circumferential groove (12) is closed between the adjacent block (61) except the recessed part (64) and the separation blocks (51) when the adjacent block (61) is grounded.

3. The tire (1) according to claim 1 or 2,
further comprising sipes (25, 26) formed in the separation blocks (51) and the adjacent block (61), respectively,
wherein all sipes (25, 26) in the separation blocks (51) and the adjacent block (61) are closed sipes (25, 26).

4. The tire (1) according to claim 3, wherein
the closed sipe (26) in the adjacent block (61) extends in the tire circumferential direction (S).

5. The tire (1) according to any one of claim 1 to 4,
further comprising a plurality of main grooves (10, 11) extending in the tire circumferential direction (S);
wherein the separation blocks (51), the step block (52), and the adjacent block (61) are formed outside a main groove (11) located in a tire width direction (H), the main groove (11) being at an outermost side in the tire width direction (H) among the plurality of main grooves (10, 11).

## Patentansprüche

1. Reifen (1), umfassend:
ein Paar von teilenden Lamellen (24), die sich in einer Reifenbreitenrichtung (H) erstrecken,
Trennblöcke (51), die auf beiden Seiten des Paares von teilenden Lamellen (24) in einer Reifenumfangsrichtung (S) angeordnet und gesondert in der Reifenumfangsrichtung (S) gebildet sind,
einen Stufenblock (52), der zwischen dem Paar von teilenden Lamellen (24) geteilt ist und eine Stufe zu einem Trennblock (51) bildet, durch eine Lauffläche (54), die sichinnerhalb in einer Reifenradialrichtung (K) der Laufflächen (53) der Trennblöcke (51) befindet,
einen benachbarten Block (61), der dem Trennblock (51) und dem Stufenblock (52) in der Reifenbreitenrichtung (H) über eine umlaufende Rille (12) benachbart ist und mit dem Trennblock (51) in Berührung gebracht wird, ohne mit dem Stufenblock (52) in Berührung gebracht zu werden, wenn Bodenberührung hergestellt wird, wobei
der benachbarte Block (61) einen vertieften Teil (64) auf einer Seitenwand (63) auf einer Seite einer umlaufenden Rille, entgegengesetzt zu einer Seitenwand (57) des Stufenblocks (52), aufweist.

2. Reifen (1) nach Anspruch 1, wobei
die umlaufende Rille (12) zwischen dem benachbarten Block (61) mit Ausnahme des vertieften Teils (64) und der Trennblöcke (51) geschlossen ist, wenn Bodenberührung des benachbarten Blocks (61) hergestellt wird.

3. Reifen (1) nach Anspruch 1 oder 2,
ferner umfassend Lamellen (25, 26), die jeweils in den Trennblöcken (51) beziehungsweise dem benachbarten Block (61) gebildet sind,
wobei alle Lamellen (25, 26) in den Trennblöcken (51) und dem benachbarten Block (61) geschlossene Lamellen (25, 26) sind.

4. Reifen (1) nach Anspruch 3, wobei
sich die geschlossene Lamelle (26) in dem benachbarten Block (61) in die Reifenumfangsrichtung (S) erstreckt.

5. Reifen (1) nach einem der Ansprüche 1 bis 4,
ferner umfassend eine Vielzahl von Hauptrillen (10, 11), die sich in die Reifenumfangsrichtung (S) erstrecken,
wobei die Trennblöcke (51), der Stufenblock (52) und der benachbarte Block (61) außerhalb einer Hauptrille (11), die in einer Reifenbreitenrichtung (H) angeordnet ist, gebildet sind, wobei sich die Hauptrille (11) unter der Vielzahl von Hauptrillen (10, 11) an einer in der Reifenbreitenrichtung (H) äußersten Seite befindet.

## Revendications

1. Bandage pneumatique (1), comprenant :
une paire de lamelles de division (24) s'étendant dans une direction de la largeur du bandage pneumatique (H) ;
des pavés de séparation (51) disposés sur les deux côtés de la paire de lamelles de division (24), dans une direction circonférentielle du bandage pneumatique (S), et formés séparément dans la direction circonférentielle du bandage pneumatique (S) ;
un pavé à gradin (52) divisé entre la paire de lamelles de division (24) et formant un gradin vers un pavé de séparation (51) par une face de bande de roulement (54) située à l'intérieur, dans une direction radiale du bandage pneumatique (K) des faces de bande de roulement (53) des pavés de séparation (51) ;
un pavé adjacent (61) qui est adjacent au pavé de séparation (51) et au pavé à gradin (52) dans la direction de la largeur du bandage pneumatique (H), à travers une rainure circonférentielle (12), et qui est mis en contact avec la pavé de séparation (51) sans être mis en contact avec le pavé à gradin (52) lors de son contact au sol ; dans lequel :
le pavé adjacent (61) comporte une partie évidée (64) sur une paroi latérale (63) sur un côté d'une rainure circonférentielle opposée à une paroi latérale (57) du pavé à gradin (52).

2. Bandage pneumatique (1) selon la revendication 1, dans lequel :
la rainure circonférentielle (12) est fermée entre la pavé adjacent (61), à l'exception de la partie évidée (64) et des pavés de séparation (51), lorsque le pavé adjacent (61) contacte le sol.

3. Bandage pneumatique (1) selon la revendication 1 ou 2,
comprenant en outre des lamelles (25, 26) formées respectivement dans les pavés de séparation (51) et le pavé adjacent (61)
dans lequel toutes les lamelles (25, 26) dans les pavés de séparation (51) et le pavé adjacent (61) sont des lamelles fermées (25, 26).

4. Bandage pneumatique (1) selon la revendication 3, dans lequel :
la lamelle fermée (26) dans le pavé adjacent (61) s'étend dans la direction circonférentielle du bandage pneumatique (S).

5. Bandage pneumatique (1) selon l'une quelconque des revendications 1 à 4,
comprenant en outre une pluralité de rainures principales (10, 11) s'étendant dans la direction circonférentielle du bandage pneumatique (S) ;
dans lequel les pavés de séparation (51), le pavé à gradin (52) et le pavé adjacent (61) sont formés à l'extérieur d'une rainure principale (11) disposée dans une direction de la largeur du bandage pneumatique (H), la rainure principale (11) étant située au niveau d'un côté externe extrême, dans la direction de la largeur du bandage pneumatique (H), parmi la pluralité de rainures principales (10, 11).
